# EUROPEAN PATENT APPLICATION

(11) **EP 4 723 265 A1**
(43) Date of publication of application: **08.04.2026**
(21) Application number: 24815768.7
(22) Date of filing: 21.05.2024
(51) Int. Cl.: H01M 10/04, H01M 50/466, H01M 50/46

(54) **BATTERY AND ELECTRONIC DEVICE COMPRISING SAME**

(30) Priority: 30.05.2023 KR 20230069300; 25.07.2023 KR 20230096728
(71) Applicant: Samsung Electronics Co., Ltd., Suwon-si, Gyeonggi-do 16677 (KR)
(72) Inventor: JUNG, Sinyoung, Suwon-si, Gyeonggi-do 16677 (KR); YOO, Mikyong, Suwon-si, Gyeonggi-do 16677 (KR); LEE, Yeonil, Suwon-si, Gyeonggi-do 16677 (KR); SONG, Juho, Suwon-si, Gyeonggi-do 16677 (KR)
(74) Representative: Gulde & Partner
(86) International application number: PCT/KR2024/006870
(87) International publication number: WO 2024/248391

(57) **Abstract**

According to an embodiment of the present disclosure, an electronic device may be provided. The electronic device may include a battery including a battery cell. The battery cell may include a plurality of positive electrode plates, a plurality of negative electrode plates stacked alternately with the positive electrode plates, and a single separator configured to separate the positive electrode plates from respective negative electrode plates facing same. The separator may form a plurality of layers in which the positive electrode plates and the negative electrode plates are alternately disposed one by one. The separator may include a plurality of folding regions surrounding at least a portion of first side surfaces facing a first direction of the positive electrode plates or the negative electrode plates and second side surfaces facing a second direction opposite to the first direction. The battery cell may have an atypical structure including at least one portion recessed from the folding regions in the first direction or the second direction.

## Description

### [Technical Field]

Examples disclosed herein relate to a battery and an electronic device including the same.

### [Background Art]

Due to advancement in information and communication technology and semiconductor technology, various functions are being integrated into a single portable electronic device. For example, an electronic device may implement not only communication functions, but also entertainment functions such as gaming, multimedia functions such as music/video playback, communication and security functions for mobile banking, or schedule management and electronic wallet functions. These electronic devices are being miniaturized to be conveniently carried by users.

As the use of electronic devices becomes commonplace, user demands for portability and usability of electronic devices may increase. In response to such user demands, for example, a secondary battery capable of being charged or discharged is utilized as a power source of an electronic device.

### [Detailed Description of the Invention]

### [Technical Solution]

An embodiment of the disclosure may provide an electronic device. The electronic device may include a battery including a battery cell. The battery cell may include a plurality of positive electrode plates, a plurality of negative electrode plates alternately stacked with the positive electrode plates, and a single separator configured to individually separate the positive electrode plates and the negative electrode plates facing each other. The separator may form a plurality of layers in which the positive electrode plates and the negative electrode plates are alternately arranged one by one. The separator may include a plurality of folding regions configured to surround at least a portion of first side surfaces of the positive electrode plates or the negative electrode plates oriented in a first direction and second side surfaces of the positive electrode plates or the negative electrode plates oriented in a second direction opposite to the first direction. The battery cell may have an irregular structure including at least one portion retracted from the folding regions in the first direction or the second direction.

An embodiment of the disclosure may provide an electronic device. The electronic device may include a battery including a battery cell. The battery cell may include a plurality of positive electrode plates, a plurality of negative electrode plates alternately stacked with the positive electrode plates, and a single separator configured to individually separate the positive electrode plates and the negative electrode plates facing each other. The separator may form a plurality of layers in which the positive electrode plates and the negative electrode plates are alternately arranged one by one. The separator may include a plurality of folding regions configured to surround at least a portion of first side surfaces of the positive electrode plates or the negative electrode plates oriented in a first direction and second side surfaces of the positive electrode plates or the negative electrode plates oriented in a second direction opposite to the first direction. The battery cell may include a first portion and a second portion stacked on the first portion. The first portion may include at least one first positive electrode plate and at least one first negative electrode plate, each having a first surface area, and a first region of the separator. The second portion may include at least one second positive electrode plate and at least one second negative electrode plate each having a second surface area different from the first surface area, and a second region of the separator extending from the first region.

### [Brief Description of Drawings]

The above-described aspects or other aspects, configurations, and/or advantages regarding an embodiment of the disclosure may become more apparent through the following detailed description made with reference to the accompanying drawings.
FIG. 1 is a block diagram of an electronic device according to an embodiment of the disclosure in a network environment.
FIG. 2 is a front perspective view of an electronic device according to an embodiment of the disclosure.
FIG. 3 is a perspective view illustrating the electronic device of FIG. 2 according to an embodiment of the disclosure, viewed from the rear side.
FIG. 4 is a front exploded perspective view of an electronic device according to an embodiment of the disclosure.
FIG. 5 is a rear exploded perspective view of the electronic device according to an embodiment of the disclosure.
FIG. 6 is a perspective view of a battery according to an embodiment of the disclosure.
FIG. 7A is a perspective view of a battery cell according to an embodiment of the disclosure.
FIG. 7B is a plan view of the battery cell according to an embodiment of the disclosure.
FIG. 8A is a cross-sectional view taken along line A-A' in FIG. 7A. A perspective view of a battery according to an embodiment of the disclosure.
FIG. 8B is an enlarged view of portion C of FIG. 8A.
FIG 8C is a cross-sectional view taken along line B-B' in FIG. 7A.
FIG. 8D is a cross-sectional view of a state in which the battery cell 302 of FIG. 8A is included in the battery case 301.
FIG. 9A is a view illustrating a manufacturing process of a battery cell according to an embodiment of the disclosure.
FIG. 9B is view illustrating a manufacturing process of a battery cell according to an embodiment of the disclosure.
FIG. 10A is a view illustrating a manufacturing process of a battery cell according to an embodiment of the disclosure.
FIG. 10B is a view illustrating a manufacturing process of a battery cell according to an embodiment of the disclosure.
FIG. 11A is a view illustrating a manufacturing process of a battery cell according to an embodiment of the disclosure.
FIG. 11B is view illustrating a manufacturing process of a battery cell according to an embodiment of the disclosure.
FIG. 12A is a view illustrating a manufacturing process of a battery cell according to an embodiment of the disclosure.
FIG. 12B is a view illustrating a manufacturing process of a battery cell according to an embodiment of the disclosure.
FIG. 13A is a view illustrating a manufacturing process of a battery cell according to an embodiment of the disclosure.
FIG. 13B is view illustrating a manufacturing process of a battery cell according to an embodiment of the disclosure.
FIG. 14A is a view illustrating a manufacturing process of a battery cell according to an embodiment of the disclosure.
FIG. 14B is a view illustrating a manufacturing process of a battery cell according to an embodiment of the disclosure.
FIG. 15A is a view illustrating a manufacturing process of a battery cell according to an embodiment of the disclosure.
FIG. 15B is view illustrating a manufacturing process of a battery cell according to an embodiment of the disclosure.
FIG. 16A is a view illustrating a manufacturing process of a battery cell according to an embodiment of the disclosure.
FIG. 16B is a view illustrating a manufacturing process of a battery cell according to an embodiment of the disclosure.
FIG. 17A is a view illustrating a manufacturing process of a battery cell according to an embodiment of the disclosure.
FIG. 17B is view illustrating a manufacturing process of a battery cell according to an embodiment of the disclosure.
FIG. 18A is a view illustrating a manufacturing process of a battery cell according to an embodiment of the disclosure.
FIG. 18B is a view illustrating a manufacturing process of a battery cell according to an embodiment of the disclosure.
FIG. 19A is a view illustrating a manufacturing process of a battery cell according to an embodiment of the disclosure.
FIG. 19B is view illustrating a manufacturing process of a battery cell according to an embodiment of the disclosure.

Throughout the appended drawings, like reference numerals may be assigned to like components, configurations, and/or structures.

### [Mode for Carrying out the Invention]

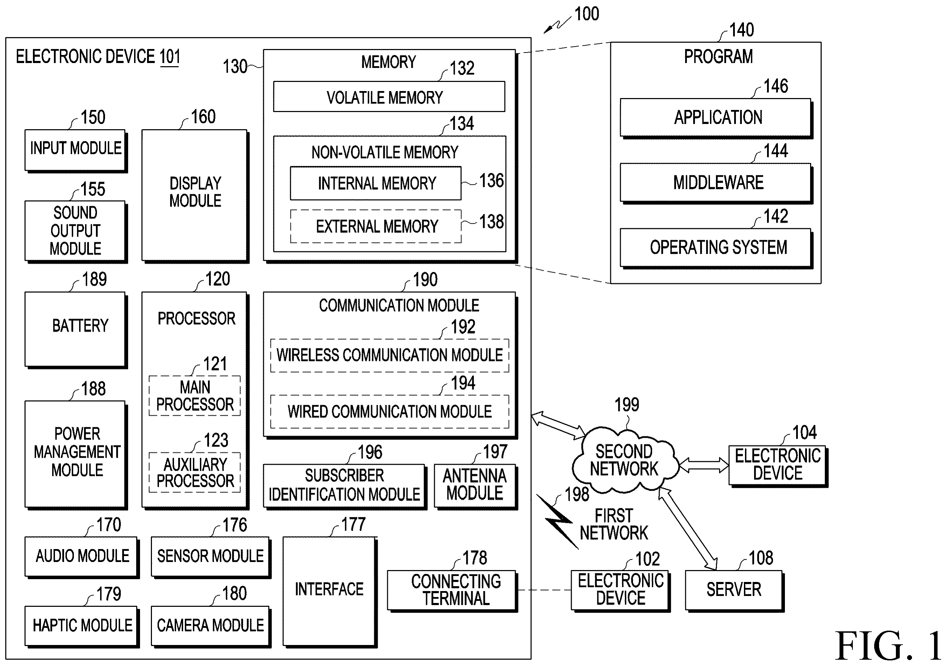

FIG. 1 is a block diagram illustrating an electronic device in a network environment according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following detailed description, a length direction, a width direction, and/or a thickness direction of an electronic device may be mentioned. The length direction may be defined as the "Y-axis direction," the width direction may be defined as the "X-axis direction," and/or the thickness direction may be defined as the "Z-axis direction." In an embodiment, the direction in which a component is oriented may be mentioned along with the orthogonal coordinate system illustrated in the drawings, as well as the "negative/positive symbol (-/+)." For example, the front surface of an electronic device or a housing may be defined as a "surface oriented in the +Z direction," and the rear surface may be defined as a "surface oriented in the -Z direction." In an embodiment, a side surface of the electronic device or the housing may include a region oriented in the +X direction, a region oriented in the +Y direction, a region oriented in the -X direction, and/or a region oriented in the -Y direction. In another embodiment, the "X-axis direction" may include both the "-X direction" and the "+X direction." It is noted that these are based on the orthogonal coordinate system illustrated in the drawings for the sake of brevity of description, and the description of these directions or components does not limit an embodiment disclosed herein. For example, depending on whether the electronic device is in an unfolded or folded state, the direction in which the aforementioned front or rear surface may vary, and the aforementioned directions may be interpreted differently depending on a user's holding habits.

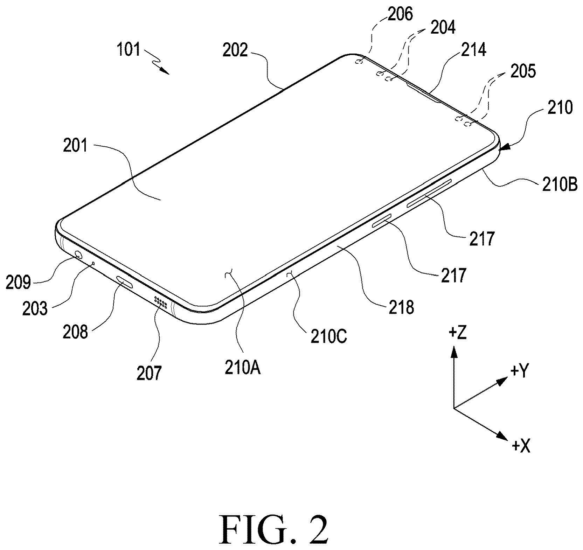

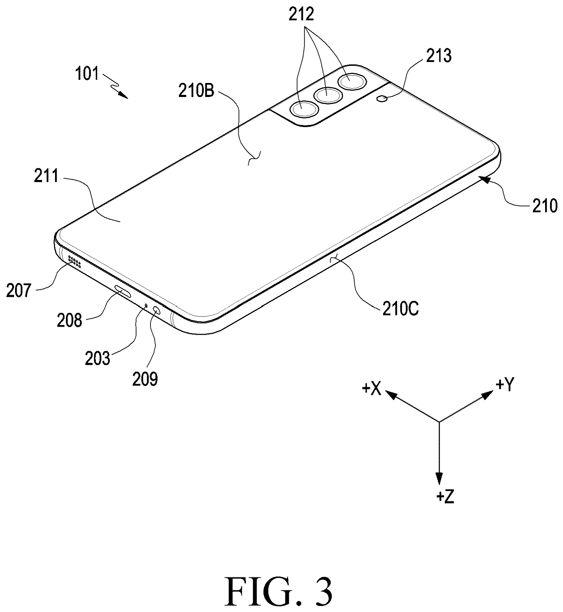

FIG. 2 is a front perspective view of an electronic device according to an embodiment of the disclosure. FIG. 3 is a perspective view illustrating the electronic device of FIG. 2 according to an embodiment of the disclosure, viewed from the rear side. The configuration of the electronic device 101 of FIGS. 2 and 3 may be wholly or partially the same as that of the electronic device 101 of FIG. 1.

Referring to FIGS. 2 and 3, according to an embodiment, the electronic device 101 may include a housing 210 including a first surface (or a front surface) 210A, a second surface (or a rear surface) 210B, and a side surface 210C surrounding the space between the first surface 210A and the second surface 210B. In an embodiment (not illustrated), the housing 210 may refer to a structure that forms at least a portion of the first surface 210A of FIG. 2, and the second surface 210B and the side surface 210C of FIG. 3. According to an embodiment, at least a portion of the first surface 210A may be defined by a substantially transparent front surface plate 202 (e.g., a glass plate or a polymer plate including various coating layers). The second surface 210B may be made of a substantially opaque rear surface plate 211. The rear surface plate 211 may be made of, for example, coated or colored glass, ceramic, polymer, metal (e.g., aluminum, stainless steel (STS), or magnesium), or a combination of two or more of these materials. The side surface 210C may be defined by the side surface structure (or a "side surface bezel structure") 218 coupled to the front surface plate 202 and the rear surface plate 211 and including metal and/or polymer. In an embodiment, the rear surface plate 211 and the side surface structure 218 may be integrated with each other and may include the same material (e.g., a metal material such as aluminum).

Although not illustrated, the front surface plate 202 may include one or more regions that are curved and extend seamlessly from at least a portion of an edge toward the rear surface plate 211. In an embodiment, the front surface plate 202 (or the rear surface plate 211) may include only one of the regions bent and extending toward the rear surface plate 211 (or the front surface plate 202), at one side edge of the first surface 210A. According to an embodiment, the front surface plate 202 or the rear surface plate 211 may have a substantially flat plate shape, and in this case, may not include a bent and extending region. When the bent and extending region is included, the thickness of the electronic device 101 in the portion including the bent and extending region may be smaller than the thicknesses of other portions.

According to an embodiment, the electronic device 101 may include at least one of a display 201, an audio module (not illustrated) including one or more sound holes 203, 207, and 214 (e.g., the audio module 170 in FIG. 1), a sensor module 204 (e.g., the sensor module 176 in FIG. 1), camera modules 205, 212, and 213 (e.g., the camera module 180 in FIG. 1), key input devices 217 (e.g., the input module 150 in FIG. 1), and connector holes 208 and 209 (e.g., the connection terminal 178 in FIG. 1). In an embodiment, at least one of the components (e.g., the key input devices 217 or the light-emitting element 206) may be omitted from the electronic device 101 or other components may be additionally included.

According to an embodiment, the display 201 may be visually exposed through a substantial portion of, for example, the front plate 202. In an embodiment, at least a portion of the display 201 may be visually exposed through the front surface plate 202 forming the first surface 210A or through a portion of the side surface 210C. In an embodiment, the edge of the display 201 may be formed to be substantially the same as the shape of the periphery of the front surface plate 202 adjacent thereto. In an embodiment (not illustrated), the distance between the periphery of the display 201 and the periphery of the front surface plate 202 may be substantially constant in order to enlarge the visually exposed area of the display 201.

In an embodiment (not illustrated), recesses or openings may be provided in a portion of the screen display region of the display 201, and one or more of a sound hole 214, the sensor modules 204, the camera modules 205, and the light-emitting elements 206, which are aligned with the recesses or the openings, may be included. In an embodiment (not illustrated), the rear surface of the screen display region of the display 201 may include at least one of the sound hole 214, the sensor modules 204, the camera modules 205, a fingerprint sensor (not illustrated), and the light-emitting elements 206. In an embodiment (not illustrated), the display 201 may be coupled to or disposed adjacent to a touch-sensitive circuit, a pressure sensor capable of measuring a touch intensity (pressure), and/or a digitizer configured to detect an electromagnetic field-type stylus pen. In an embodiment, at least some of the sensor modules 204 and/or at least some of the key input devices 217 may be disposed on the side surface 210C.

According to an embodiment, an audio module (not illustrated) may include a microphone hole 203 and sound holes 207 and 214. A microphone configured to acquire external sound may be placed inside the microphone hole 203, and in an embodiment, a plurality of microphones may be placed to detect the direction of sound. According to an embodiment, the sound holes 207 and 214 may include an external sound hole 207 and a communication receiver hole 214. In an embodiment, the sound holes 207 and 214 and the microphone hole 203 may be implemented as one hole, or a speaker may be included in the audio module without the sound holes 207 and 214 (e.g., a piezo speaker).

According to an embodiment, the sensor modules 204 may generate electrical signals or data valuescorresponding to an internal operating state or an external environmental state of the electronic device 101. The sensor modules 204 may include, for example, a first sensor module 204 (e.g., a proximity sensor) and/or a second sensor module (not illustrated) (e.g., a fingerprint sensor) disposed on the first surface 210A of the housing 210. According to an embodiment, an additional sensor module may be disposed on the second surface 210B of the housing 210. The fingerprint sensor (not illustrated) may be disposed not only on the first surface 210A (e.g., the display 201) of the housing 210, but also on the second surface 210B or the side surface 210C of the housing 210. The electronic device 101 may further include at least one of, for example, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor 204.

According to an embodiment, the camera modules 205, 212, and 213 may include a first camera device 205 disposed on the first surface 210A of the electronic device 101, and a second camera device 212 and/or a flash 213 disposed on the second surface 210B. The camera devices 205 and 212 may include one or more lenses, an image sensor, and/or an image signal processor. The flash 213 may include, for example, a light-emitting diode or a xenon lamp. In an embodiment, one or more lenses (e.g., an infrared camera lens, a wide-angle lens, and a telephoto lens) and image sensors may be disposed on one surface of the electronic device 101. In an embodiment, the flash 213 may emit infrared rays. For example, the infrared rays emitted from the flash 213 and reflected by an object may be received through a sensor module (not illustrated) disposed on the second surface 210B of the housing 210. The electronic device 101 or the processor of the electronic device 101 may detect depth information of a subject based on a time point at which infrared rays are received by the sensor module.

According to an embodiment, the key input device 217 may be disposed on the side surface 210C of the housing 210. In an embodiment, the electronic device 101 may not include some or all of the above-described key input devices 217, and the key input devices 217 not included may be implemented in another form, such as soft keys, on the display 201. In an embodiment, the key input devices may include a sensor module disposed on the second surface 210B of the housing 210.

According to an embodiment, the light-emitting element 206 may be disposed on, for example, the first surface 210A of the housing 210. The light-emitting elements 206 may provide, for example, the state information of the electronic device 101 in the form of light. In an embodiment, the light-emitting elements 206 may provide, for example, a light source that operates in conjunction with the operation of the camera module 205. The light-emitting elements 206 may include, for example, an LED, an IR LED, and a xenon lamp.

According to an embodiment, the connector holes 208 and 209 may include a first connector hole 208 capable of accommodating a connector (e.g., a USB connector) configured to transmit/receive power and/or data to/from an external electronic device, and a second connector hole (e.g., an earphone jack) 209 capable of accommodating a connector configured to transmit/receive an audio signal to/from an external electronic device.

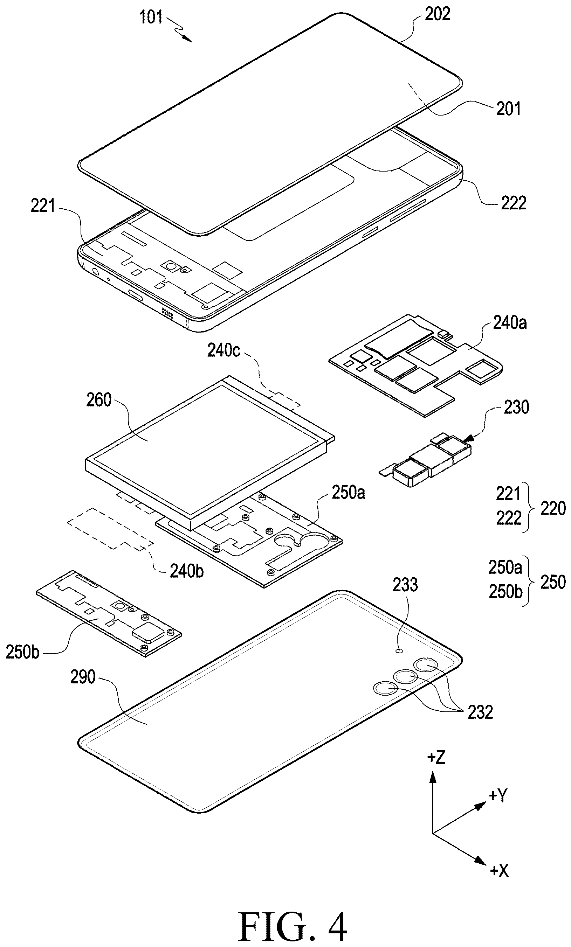

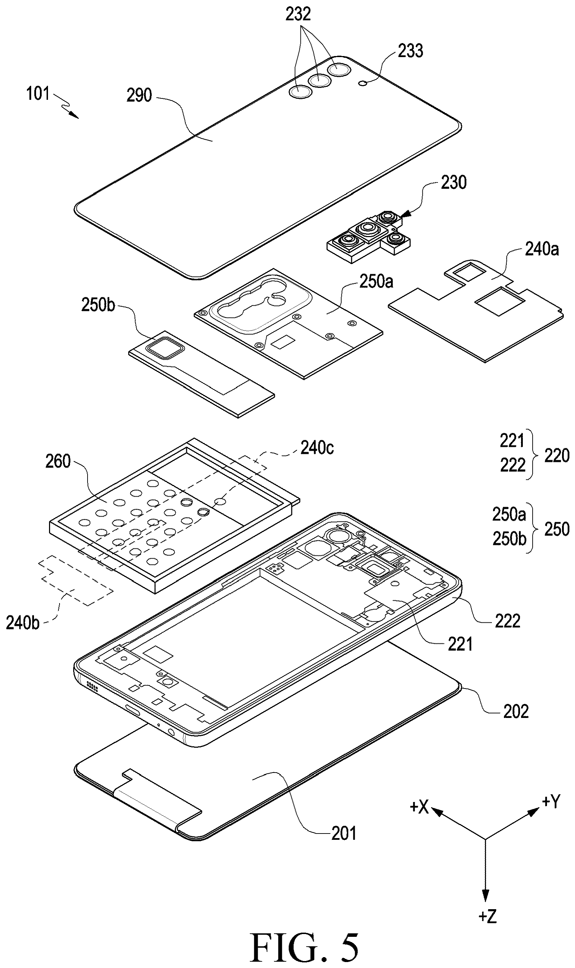

FIG. 4 is a front exploded perspective view of an electronic device according to an embodiment of the disclosure. FIG. 5 is a rear exploded perspective view of an electronic device according to an embodiment of the disclosure.

Referring to FIGS. 4 and 5, the electronic device 101 (e.g., the electronic device 101 in FIG. 1 and/or the electronic device 101 in FIG. 2 or 3) may include a display 201 (e.g., the display 201 in FIG. 2), a front surface plate 202 (e.g., the front surface plate 202 in FIG. 2), a support structure 221 (e.g., a bracket), a side surface bezel structure 222, a camera module 230 (e.g., the camera module 180 in FIG. 1), one or more printed circuit boards (or PCB assemblies) 240a and 240b, a battery 260 (e.g., the battery 189 in FIG. 1), a rear case 250, an antenna (not illustrated) (e.g., the antenna module 197 in FIG. 1), and/or a rear surface plate 290 (e.g., the rear surface plate 211 in FIG. 3). According to an embodiment, in the electronic device 101, at least one component (e.g., the support structure 221 or the rear case 250) may be omitted or other components may be additionally included. At least one of the components of the electronic device 101 may be the same as or similar to at least one of the components of the electronic device 101 illustrated in FIG. 2 or FIG. 3, and redundant descriptions are omitted below.

In an embodiment, the support structure 221 may be provided in at least a partially planar form. In another embodiment, the support structure 221 may be disposed inside the electronic device 101 and may be either connected to or integrated with the side surface bezel structure 222. For example, the support structure 221 may be made of a conductive material and/or a non-conductive material (e.g., polymer). When the support structure 221 includes a conductive material such as metal, a portion of the side surface bezel structure 222 or the support structure 221 may function as an antenna. The support structure 221 may have two surfaces facing away from each other. The display 201 may be disposed on one of the two surfaces of the support structure 221, while the printed circuit boards 240a and 240b may be disposed on the other surface.

According to an embodiment, the support member 221 and the side surface bezel structure 222 may be combined and referred to as a front case or a housing 220. According to an embodiment, the housing 220 may be generally understood as a structure to accommodate, protect, or place electrical/electronic components such as printed circuit boards 240a and 240b or a battery 260. In an embodiment, it may be understood that the housing 220 includes structures capable of being visually or tactually recognized by a user in the exterior of the electronic device 101, such as the side surface bezel structure 222, the front surface plate 202, and/or the rear surface plate 290. In an embodiment, the "front surface or rear surface of the housing 220" may refer to the first surface 210A in FIG. 2 or the second surface 210B in FIG. 3. In an embodiment, the support member 221 may be disposed between the front surface plate 202 (e.g., the first surface 210A in FIG. 1) and the rear surface plate 290 (e.g., the second surface 210B in FIG. 3) and may serve as a structure on which electrical/electronic components, such as the printed circuit boards 240a and 240b or the camera module 230, are disposed. In the detailed description below, the camera module 230 may be exemplified as being generally configured to receive light incident through the second surface 210B in FIG. 3, but the camera module 205 of FIG. 2 may also be disposed inside an electronic device 101 through the configuration of an embodiment described below.

According to an embodiment, the camera module 230 may include at least one camera module, for example, at least one of the multiple camera modules illustrated in FIGS. 4 and 5. In an embodiment, the camera module 230 may be disposed on a portion of the support structure 221 at a position near the printed circuit boards 240a and 240b. In another embodiment, the camera module 230 may be at least partially enclosed by the rear case 250 (e.g., the upper rear case 250a). According to an embodiment, the camera module 230 may receive, inside the electronic device 101, at least a portion of the light entering through one or more cover windows of the second camera device 212 disposed on rear surface (e.g., the second surface 210B in FIG. 3) of the electronic device 101. According to an embodiment, the camera module 230 may generally be aligned with one of the cover windows.

According to an embodiment, the printed circuit boards 240a and 240b may include circuit devices implemented in the form of integrated circuit chips (e.g., a processor), a communication module (e.g., communication module 190 in FIG. 1), a power management module (e.g., the power management module 188), memory (e.g., the memory 130 in FIG. 1), an interface (e.g., the interface 177 in FIG. 1), or various electrical/electronic components. The processor (e.g., the processor 120 in FIG. 1) may include one or more of a central processing unit (CPU), an application processor, a graphics processing unit (GPU), an image signal processor, a sensor hub processor, or a communication processor. The memory may include, for example, volatile memory or non-volatile memory. The interface may include, for example, a high-definition multimedia interface (HDMI), a universal serial bus (USB) interface, an SD card interface, and/or an audio interface. For example, the interface may electrically or physically connect the electronic device 101 to an external electronic device, and may include a USB connector, an SD card/MMC connector, or an audio connector. According to an embodiment, the printed circuit boards 240a and 240b may be provided with electromagnetic shielding from the rear case 250.

According to an embodiment, the battery 260 may serve as a device that supplies power to at least one component of the electronic device 101, and may include, for example, a non-rechargeable primary cell, a rechargeable secondary cell, or a fuel cell. At least a portion of the battery 260 may be disposed on substantially the same plane as, for example, the printed circuit boards 240a and 240b. The battery 260 may be integrally disposed inside the electronic device 101 or may be detachably disposed on the electronic device 101.

According to an embodiment, the rear case 250 may include an upper rear case 250a and a lower rear case 250b. In an embodiment, the upper rear case 250a may be disposed to enclose the printed circuit boards 240a and 240b (e.g., the first circuit board 240a) together with a portion of the support structure 221. For example, the upper rear case 250a may be disposed to face the support structure 221 with the first circuit board 240a interposed therebetween.

According to an embodiment, the lower rear case 250b may serve as a structure configured to dispose various electric/electronic components such as a speaker module and an interface (e.g., a USB connector, an SD card/MMC connector, or an audio connector). According to an embodiment, electrical/electronic components, such as an interface (e.g., a USB connector, an SD card/MMC connector, or an audio connector), may be disposed on an additional printed circuit board (not illustrated). In this case, the lower rear case 250b may be disposed to enclose the additional printed circuit board (not illustrated) together with another portion of the support structure 221. For example, the interface disposed on the additional printed circuit board (not illustrated) or the lower rear case 250b may be disposed to correspond to the audio hole 207 or the connector holes 208 and 209 illustrated in FIG. 2.

According to an embodiment, an antenna (not illustrated) may include a conductor pattern implemented on the surface of the rear case 250, for example, through a laser direct structuring (LDS) process. In an embodiment, the antenna may include a printed circuit pattern provided on the surface of a thin film, and the thin film-type antenna may be disposed between the rear surface plate 290 and the battery 260. The antenna may include, for example, a near-field communication (NFC) antenna, a wireless charging antenna, and/or a magnetic secure transmission (MST) antenna. The antenna may, for example, perform near-field communication with an external device, or wirelessly transmit and receive power required for charging. In an embodiment, another antenna structure may be configured by a part of, or a combination of, the support structure 221 and/or the side surface bezel structure 222.

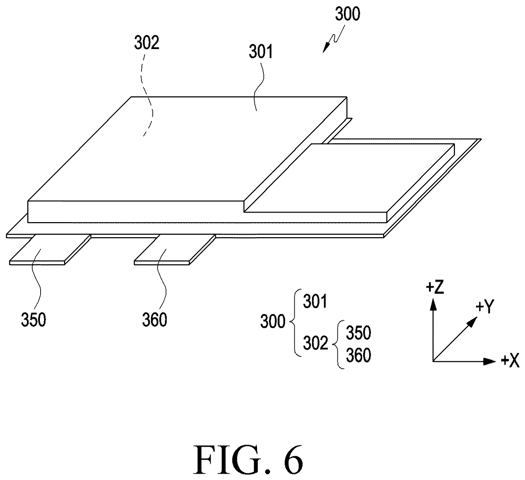

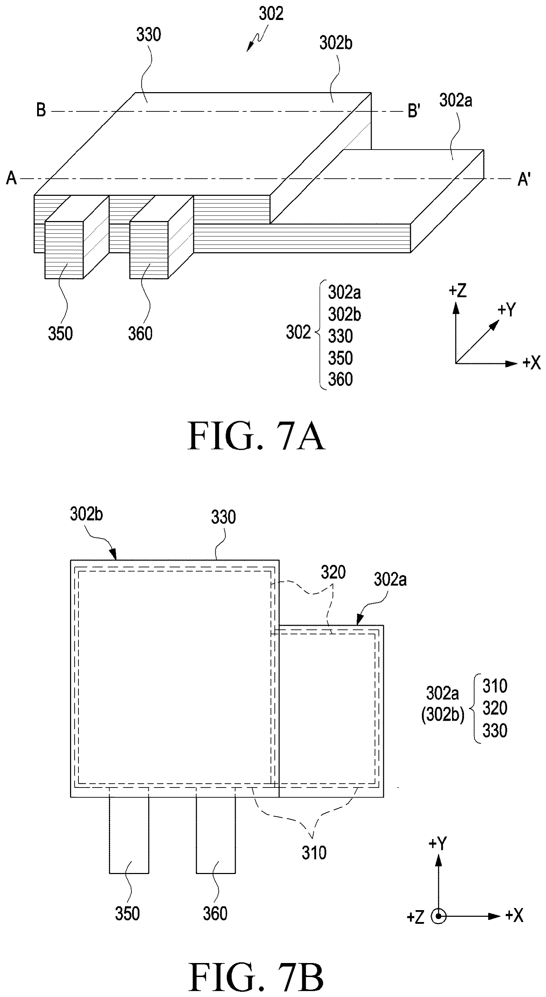

FIG. 6 is a perspective view of a battery according to an embodiment of the disclosure. FIG. 7A is a perspective view of a battery cell according to an embodiment of the disclosure. FIG. 7B is a plan view of the battery cell according to an embodiment of the disclosure.

The configuration of the battery 300 in FIGS. 6 to 7B may be wholly or partially the same as the configuration of the battery 189 of FIG. 1 and/or the battery 260 of FIGS. 4 and 5.

Referring to FIGS. 6 and 7A, in an embodiment, the battery 300 may include a battery case 301 and a battery cell 302 disposed in or encapsulated by the battery case 301. According to an embodiment, the battery 300 may be disposed in an electronic device (e.g., the electronic device 101 of FIGS. 2 to 5) and may supply power to at least one component (e.g., the processor 120 of FIG. 1) of the electronic device 101. For example, the battery 300 may be a rechargeable secondary battery.

The shape of the battery cell 302 (or an electrode assembly) according to an embodiment of the disclosure is not limited, and depending on the shape of an electronic device (e.g., the electronic device 101 of FIGS. 2 to 5) or the shape of an mounting space inside the electronic device 101, the battery cell 302 may be manufactured to have a planar or cross-sectional shape (e.g., a Z-axis-directional surface) that is irregular, in addition to a regular shape such as a rectangle, so as to maximize its surface area or capacity. In the disclosure, the term "irregular" may refer to a shape other than a rectangular shape (e.g., a square or a rectangle), and may be a free shape that is recessed inward or protruded outward from a polygonal member such as a rectangular member. For example, irregular electrode plates 310 and 320 may be formed to include various shapes, such as circular, L-shaped, or U-shaped, at least partially on their planar or cross-sectional surfaces (e.g., Z-axis-directional surfaces).

Referring to FIG. 6, in an embodiment, the battery case 301 may substantially form an outer shape of the battery 300. For example, the battery case 301 may be made of a metal material such as aluminum or stainless steel. The shape of the battery case 301 is not limited and may vary depending on the shape of an electronic device (e.g., the electronic device 101 of FIGS. 2 to 5), or the type or shape of a mounting space inside the electronic device 101, and/or the battery cell 302. For example, the battery case 301 may include a prismatic structure such as a pouch or a can that includes the battery cell 302.

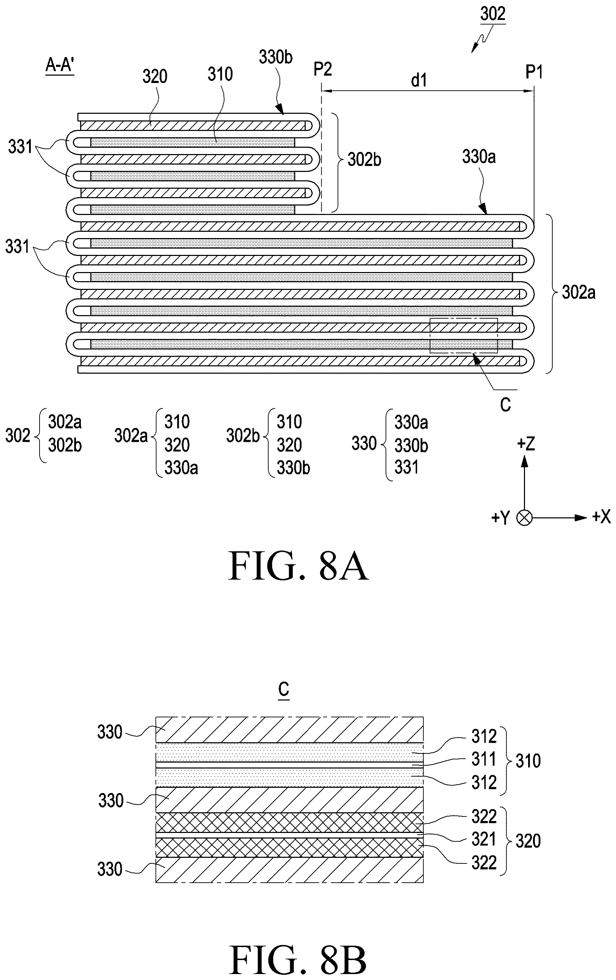

Referring to FIGS. 7A and 7B, in an embodiment, the battery cell 302 may include a plurality of positive electrode plates 310, a plurality of negative electrode plates 320, a separator 330, and a positive electrode tab 350 and/or a negative electrode tab 360. As will be described later with reference to FIGS. 8A to 8D, in an embodiment, the battery cell 302 may be an electrode assembly formed by alternately stacking a plurality of positive electrode plates 310 and a plurality of negative electrode plates 320 and may include at least one stepped structure (e.g., a difference between a first point P1 and a second point P2 of FIG. 8A).

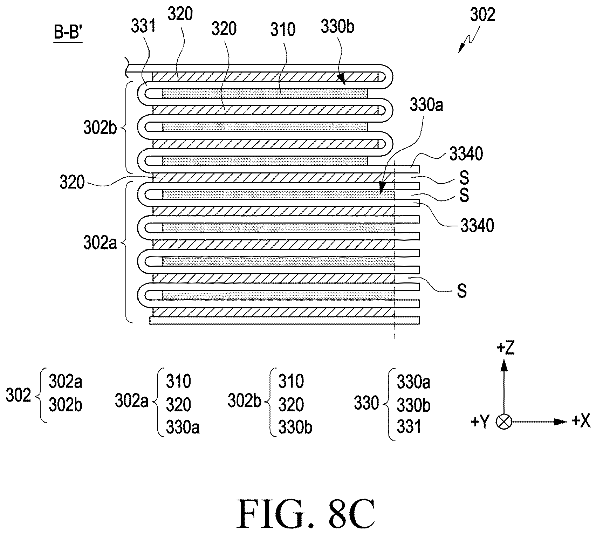

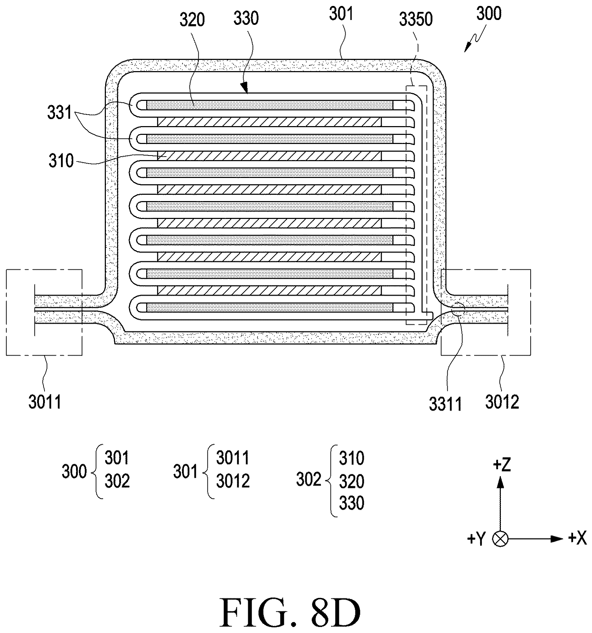

FIG. 8A is a cross-sectional view taken along line A-A' of FIG. 7A. FIG. 8B is an enlarged view of portion C of FIG. 8A. FIG. 8C is a cross-sectional view taken along line B-B' of FIG. 7A. FIG. 8D is a cross-sectional view of a state in which the battery cell 302 of FIG. 8A is included in the battery case 301.

According to an embodiment, the separator 330 may include a plurality of folding regions 331 configured to surround at least a portion of opposite side surfaces (e.g., the +X-directional and -X-directional side surfaces) of the positive electrode plates or the negative electrode plates. For example, in FIG. 8A, the folding regions 331 may surround at least a portion of one side surface (e.g., the -X-directional side surface) of each of the positive electrode plates 310 and may surround one side surface (e.g., the +X-directional side surface) of each of the negative electrode plates 320. For example, the battery cell 302 of FIGS. 8A to 8C may represent an electrode assembly before the separator 330 is bonded and processed. For example, the battery cell 302 of FIGS. 8A to 8C may be processed so that upper and lower folding regions 331 of the separator 330 are bonded to each other before the battery cell 302 is disposed inside the battery case 301 of FIG. 6, and side surfaces (e.g., the X-directional and Y-directional side surfaces) of the electrode plates 310 and 320 may not be exposed as an exterior of the battery cell 302.

In an embodiment, the battery cell 302 may be an electrode assembly including at least one stepped structure (e.g., a stair-like structure). The stepped structure of the battery cell 302 (or the electrode assembly) may be formed by the positive electrode plates 310 and the negative electrode plates 320 stacked vertically (e.g., in a Z-axis direction) having different surface areas and/or shapes. In an embodiment, the battery cell 302 (or the electrode assembly) may include a first portion 302a and a second portion 302b having different surface areas so as to form a stepped structure. The number of stepped structures of the battery cell 302 (or the electrode assembly) is not limited, and may include multiple stepped structures as needed. According to an embodiment, the first portion 302a and/or the second portion 302b, for example, electrode plates 310 and 320 constituting the first and second portions, may be formed in an irregular shape. In the disclosure, the term "surface area" of the first portion 302a or the second portion 302b, or the "surface area" of the electrode plates 310 and 320 (e.g., the first surface area or the second surface area), may refer to the surface areas of the surfaces stacked on each other (e.g., the +Z-directional or -Z-directional surfaces).

According to an embodiment, the first portion 302a may include at least one positive electrode plate 310 having the first surface area, at least one negative electrode plate 320 having a first surface area, and a first region 330a of the separator 330. According to an embodiment, the separator 330 constituting the first portion 302a and the second portion 302b of the battery cell 302 may be a single member, and for convenience of explanation, it may be described as being divided into a first region 330a and a second region 330b, respectively. For example, the first region 330a and the second region 330b of the separator 330 may be distinguished by a dotted line in FIG. 8A for convenience of illustration. According to an embodiment, the first portion 302a may include a plurality of positive electrode plates 310 and a plurality of negative electrode plates 320 disposed to be aligned or overlapped with each other in a stacking direction (e.g., the Z-axis direction).

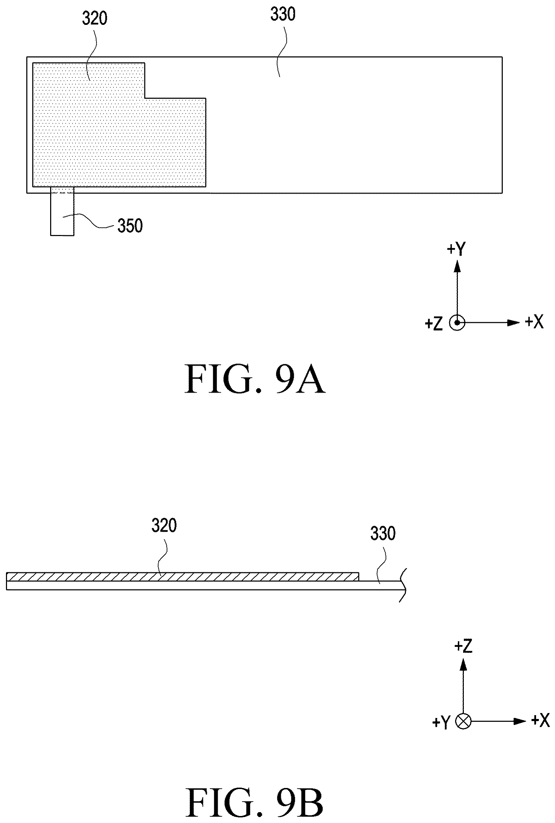

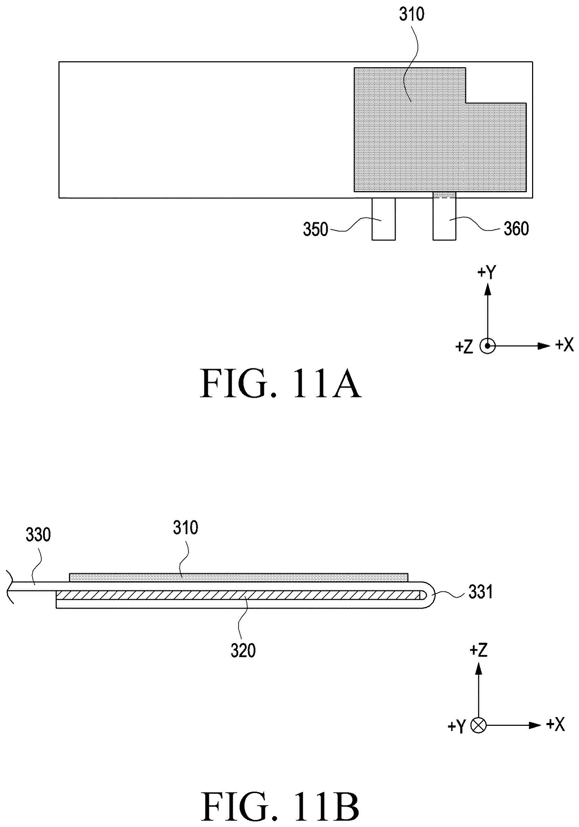

Referring to FIGS. 7A and 7B, according to an embodiment, the electrode plates 310 and 320 forming the first portion 302a may be formed in various shapes. For example, they may be formed in an irregular shape rather than in a square or rectangular shape. Referring to FIG. 7B, the electrode plates 310 and 320 (e.g., the positive electrode plates 310 of FIG. 11A and the negative electrode plates 320 of FIG. 9B) constituting the first portion 302a may, for example, be formed in an "L" shape. The electrode plates 310 and 320 constituting the second portion 302b may, for example, be formed in an "I" shape. The electrode plates 310 and 320 constituting the first portion 302a and the second portion 302b may be formed in different shapes from each other. However, the shape of the first portion 302a or the electrode plates 310 and 320 constituting the same is not limited. According to an embodiment, the shape formed by the first portion 302a or the electrode plates (e.g., the electrode plates 310 and 320 of FIG. 8A) constituting the same is not limited to a square or a rectangle, and may, for example, include a circular, polygonal, irregular, or combined shape thereof, and may vary depending on the shape of an electronic device (e.g., the electronic device 101 of FIGS. 2 to 5) or the shape of a mounting space inside the electronic device 101.

According to an embodiment, the second portion 302b may include at least one positive electrode plate 310 having the second surface area different from the first surface area, at least one negative electrode plate 320 having the second surface area, and a second region 330b of the separator 330 extending from the first region 330a. According to an embodiment, the first portion 302a may include at least one positive electrode plate 310 having the first surface area, at least one negative electrode plate 320 having the first surface area, and a first region 330a of the separator 330. According to an embodiment, the second portion 302b may include a plurality of positive electrode plates 310 and a plurality of negative electrode plates 320 arranged to be aligned or overlapped with each other in a stacking direction (e.g., the Z-axis direction). For example, the positive electrode plates 310 and the negative electrode plates 320 of the second portion 302b may be formed in substantially the same shape (e.g., an irregular or regular shape) having the second surface area.

According to an embodiment, the first portion 302a including at least one positive electrode plate 310, at least one negative electrode plate 320, and the first region 330a of the separator 330 may form a first height (e.g., a height in the Z-axis direction). The second portion 302b including at least one positive electrode plate 310, at least one negative electrode plate 320, and the separator 330 extending from the first region 330a may form a second height (e.g., a height in the Z-axis direction). The first height and the second height may be different from each other.

Referring to FIGS. 7A and 7B, according to an embodiment, the electrode plates 310 and 320 of the second portion 302b may be square or rectangular, and may be stacked on the first portion 302a so as to overlap the first portion 302a. However, the shape and arrangement of the second portion 302b are not limited. In an embodiment (not illustrated), the positive electrode plates 310 and the negative electrode plates 320 of the second portion 302b may be formed in irregular shapes. In an embodiment (not illustrated), the second portion 302b may be arranged to include overlapping and non-overlapping portions with the first portion 302a when viewed in a stacking direction (the Z-axis direction). Referring to FIG. 7B, according to an embodiment, at least a portion of the separator 330 may be notched (or cut) due to the structure of the irregular first portion 302a.

According to an embodiment, the first region 302a may be formed by stacking at least one positive electrode plate 310, at least one negative electrode plate 320, and the separator 330. According to an embodiment, the second region 302b may be formed by stacking at least one positive electrode plate 310, at least one negative electrode plate 320, and the separator 330. In an embodiment, the second region 302b may include a portion retracted by a predetermined distance (e.g., the distance d1 of FIG. 8A) in one direction (e.g., the -X direction) from a first point (e.g., the first point P1 of FIG. 8A) of the first region 302a to a second point (e.g., the second point P2 of FIG. 8A). According to an embodiment, the separator 330 may include a plurality of folding regions 331 configured to surround at least a portion of opposite side surfaces (e.g., the +X-directional and -X-directional side surfaces) of the positive electrode plates or the negative electrode plates. For example, in FIG. 8A, the folding regions 331 may surround at least a portion of one side surface (e.g., the -X-directional side surface) of each of the positive electrode plates 310 and may surround one side surface (e.g., the +X-directional side surface) of each of the negative electrode plates 320.

Referring to FIG. 8B, in an embodiment, the positive electrode plate 310, the negative electrode plate 320, and the separator 330 may be stacked with one another. In an embodiment, the positive electrode plate 310 (or a positive electrode) may correspond to a reduction electrode (cathode). Referring to FIG. 8B, the positive electrode plate 310 may include a positive electrode substrate 311 and a positive electrode mixture 312 disposed or coated on one surface or both surfaces of the positive electrode substrate 311. For example, the positive electrode substrate 311 may include aluminum (Al). For example, the positive electrode mixture 312 may include a lithium (Li) oxide containing at least one transition metal, such as cobalt (Co), manganese (Mn), or iron (Fe). For example, the positive electrode mixture 312 may be disposed over an entire surface of the positive electrode substrate 311, or may be disposed over a remaining region of the surface of the positive electrode substrate 311 except for a non-coating portion where coating is not applied.

In an embodiment, the negative electrode plate 320 (or a negative electrode) may correspond to an oxidation electrode (anode). Referring to FIG. 8B, in an embodiment, the negative electrode plate 320 may include a negative electrode substrate 321 and a negative electrode mixture 322 disposed or coated on one surface or both surfaces of the negative electrode substrate 321. For example, the negative electrode substrate 321 may include nickel (Ni) and/or copper (Cu). For example, the negative electrode mixture 322 may include graphite and/or lithium titanium oxide. For example, the negative electrode mixture 322 may be disposed on an entire surface or a portion of the surface of the negative electrode substrate 321. For example, the negative electrode mixture 322 may be disposed on an entire surface of the negative electrode substrate 321, or over a remaining region of the surface of the negative electrode substrate 321 except for a non-coating portion where coating is not applied.

In an embodiment, the separator 330 may be configured to physically separate and insulate the positive electrode plate 310 and the negative electrode plate 320. According to an embodiment, the separator 330 may be a non-conductive porous body including pores that allow exchange of a predetermined substance (e.g., lithium ions) between the positive electrode plate 310 and the negative electrode plate 320. According to an embodiment, the separator 330 may include a synthetic resin having a fine porous structure (e.g., polyethylene or polypropylene). According to an embodiment, the separator 330 may form multiple layers in which the positive electrode plates 310 and the negative electrode plates 320 are alternately arranged one by one. For example, in the disclosure, an uppermost stage and a lowermost stage of the battery cell 302 (or the electrode assembly) may refer to an uppermost layer and a lowermost layer of the separator 330 that accommodate the electrode plates 310 and 320, respectively. For example, the separator 330 may be an elongated rectangular film member and may be alternately folded in a Z-shape at opposite sides (e.g., the X-directional sides). According to an embodiment, the positive electrode mixture 312 of a positive electrode plate 310 may face the negative electrode mixture 322 of the negative electrode plate 320 disposed in an adjacent layer, with the separator 330 interposed therebetween.

Referring to FIGS. 8C and 8D, according to an embodiment, the rectangular separator 330 may be folded and stacked at left and right side surfaces (the X-directional side surfaces) of the positive electrode plates 310 or the negative electrode plates 320. Referring to FIG. 8C, according to an embodiment, the separator 330 (or the first region 330a) that has been folded and stacked multiple times may include portions that do not overlap irregular positive electrode plates 310 and irregular negative electrode plates 320 of the first portion 302a, and the portions may be notched with margins 3340 from the edges of the electrode plates 310 and 320. For example, at least a portion of the folding regions 331 of the separator 330 may be notched so that openings (e.g., the openings s of FIG. 8C) are formed, and through the openings s, the side surfaces of the electrode plates 310 and 320 may be exposed to the outside.

Referring to FIG. 8D, the folding regions 331 of the separator 330 disposed above and below (in the Z-axis direction) may be welded or processed to be integrated with each other. For example, the margins 3340 of the separator 330 disposed above and below may be bonded to be integrated with each other, and the openings s of FIG. 8C may be closed. As illustrated in FIG. 8D, the folding regions 331 and the margins 3340 disposed above and below (in the Z-axis direction) may be arranged such that the separator 330 overlaps itself, for example, at an overlap region 3350 (see FIG. 8D). By bonding and processing the folding regions 331 and the margins 3340, the side surfaces of the electrode plates 310 and 320 may be surrounded by the separator 330 and may not be exposed to the outside. Referring to FIG. 8D, in an embodiment, the battery 300 may further include a battery case 301 (e.g., the battery case 301 of FIGS. 6 to 7B) formed to surround the battery cell 302. For example, the battery case 301 may include at least one sealing region 3011 or 3012. For example, the sealing regions 3011 and 3012 may be bonded or closed to close an internal space of the battery case 301 in which the battery cell 302 is disposed. For example, a portion of the separator 330 indicated by reference numeral 3350 in FIG. 8D may be disposed in a space between the sealing regions 3012 and may be bonded together with the sealing regions 3012. The separator 330 may be integrated with at least a portion of the sealing region 3012, an overlap region 3350 adjacent to the sealing region 3012, and/or a portion between the overlap region 3350 and the sealing region 3012.

In an embodiment, at a portion where the stepped structure of the battery cell 302 (or the electrode assembly) starts, among the two electrode plates 310 and 320 of different polarities in the first portion 302a and the second portion 302b facing each other with the separator 330 interposed therebetween, the electrode plate having a greater surface area may correspond to the negative electrode plate 320. For example, when the first surface area of the electrode plates 310 and 320 of the first portion 302a is greater than the second surface area of the electrode plates 310 and 320 of the second portion 302b, the negative electrode plate 320 may be disposed at the uppermost stage of the first portion 302a (or at the uppermost layer formed by the first region 330a of the separator 330). When the electrode plate having a greater surface area among the two electrode plates 310 and 320 of different polarities in the first portion 302a and the second portion 302b facing each other with the separator 330 interposed therebetween corresponds to the negative electrode plate 320, a decrease in battery life or deterioration in battery stability due to deposition of by-products (e.g., lithium metal) from the positive electrode plate 310 may be mitigated as compared with a case in which the greater electrode plate corresponds to the positive electrode plate 310.

In an embodiment, a positive electrode plate 310 or a negative electrode plate 320 disposed at the uppermost stage or the lowermost stage of the battery cell 302 (or the electrode assembly) may be arranged such that its outer surface is surrounded by the separator 330. A positive electrode plate 310 or a negative electrode plate 320 may be disposed. In FIGS. 8A and 8C, an example is illustrated in which the negative electrode plate 320 is disposed at the uppermost stage or the lowermost stage of the electrode assembly, but the disclosure is not limited thereto, and the positive electrode plate 310 may be disposed instead of the negative electrode plate 320. For example, the positive electrode plate 310 (or the negative electrode plate 320) disposed at the uppermost stage or the lowermost stage of the battery cell 302 (or the electrode assembly) may include a positive electrode mixture 312 (or a negative electrode mixture 322) disposed on one of the opposite surfaces of the positive electrode substrate 311 (or the negative electrode substrate 321) that faces the inner side of a member of the battery cell 302.

In an embodiment, the battery cell 302 may include a positive electrode tab 350 and a negative electrode tab 360 spaced apart from each other on the same side surface (e.g., the -Y-directional side surface). In an embodiment, at least one positive electrode tab 350 may be coupled to each of the positive electrode plates 310 and may protrude in one direction (e.g., the -Y direction) from the positive electrode plate 310. In an embodiment, at least one negative electrode tab 360 may be coupled to each of the negative electrode plates 320 and may protrude in one direction (e.g., the -Y direction) from the negative electrode plate 320. For example, the separator 330 may be stacked on a portion of the positive electrode tab 350 and the negative electrode tab 360 or may overlap a portion of the positive electrode tab 350 and the negative electrode tab 360.

In an embodiment (not illustrated), the plurality of positive electrode plates 310 may be electrically connected to each other by the positive electrode tab 350. For example, the plurality of positive electrode tabs 350 may be welded (e.g., by tab welding) or bonded into a single tab, and the plurality of negative electrode plates 320 may be electrically connected to each other by the negative electrode tab 360. For example, the plurality of negative electrode tabs 360 may be welded (e.g., by tab welding) or bonded into a single tab. In an embodiment, the plurality of positive electrode tabs 350 may be connected to each other by using ultrasonic welding or laser welding, and the plurality of negative electrode tabs 360 may be connected to each other by using ultrasonic welding or laser welding. In an embodiment, the positive electrode tab 350 may be electrically separated from the negative electrode tab 360.

In an embodiment, the second portion 302b may have a smaller surface area than the first portion 302a and may be stacked on the first portion 302a to form a stepped structure, but the disclosure is not limited thereto. For example, the second portion 302b may have a greater surface area than the first portion 302a and may include electrode plates 310 and 320 having the second surface area larger than the first surface area of the electrode plates 310 and 320 of the first portion 302a. Although not illustrated in the drawings, according to an embodiment, the second portion 302b may be manufactured to have an extension or a protrusion protruding laterally (e.g., in the X-axis direction and/or Y-axis direction) from the first portion 302a. In another embodiment (not illustrated), the battery cell may further include one or more additional electrode stacks disposed on the second portion 302b to form two or more stepped structures, the additional electrode stacks including at least one positive electrode plate 310 and at least one negative electrode plate 320 having a surface area different from the second surface area, and a portion of the separator 330 extending from the second region 330b. In an embodiment (not illustrated), the electrode plates 310 and 320 of the second portion 302b may be formed in an irregular shape.

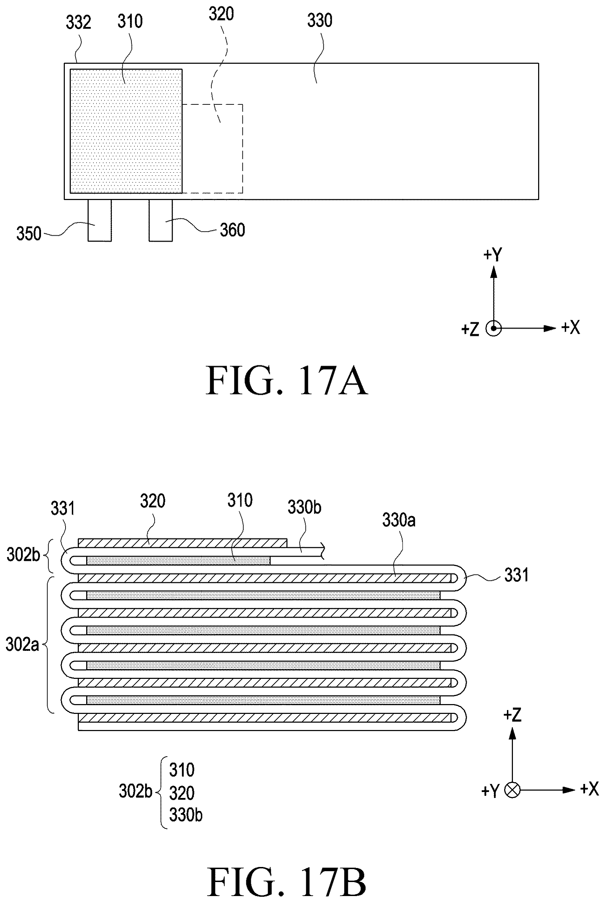

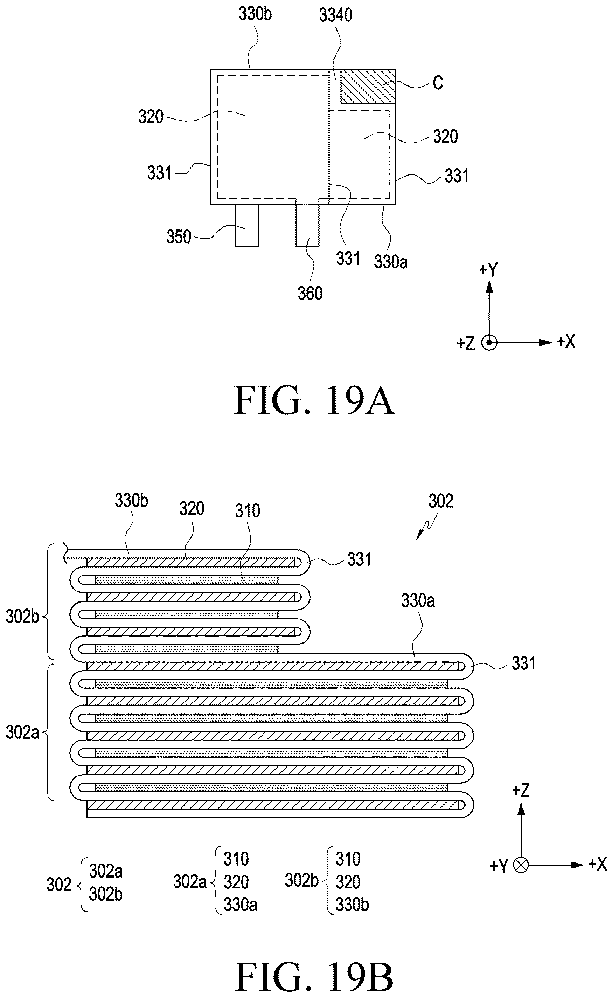

Hereinafter, referring to FIGS. 9A to 19B, a manufacturing process of the battery cell 302 (or the electrode assembly) will be described.

FIGS. 9A to 19B are views illustrating a manufacturing processes of a battery cell according to an embodiment of the disclosure. FIGS. 9B, 10B, 11B, 12B, 13B, 14B, 15B, 16B, 17B, 18B, and 19B may each be a front view of FIGS. 9A, 10A, 11A, 12A, 13A, 14A, 15A, 16A, 17A, 18A, and 19A, respectively, and illustration of a negative electrode tab and a positive electrode tab may be omitted.

The positive electrode plates 310, the negative electrode plates 320, the separator 330, the positive electrode tab 350, and the negative electrode tab 360 of FIGS. 9A to 19B may correspond to the positive electrode plates 310, the negative electrode plates 320, the separator 330, the positive electrode tab 350, and the negative electrode tab 360 of the embodiment described above with reference to FIGS. 6 to 8C.

In an embodiment, the battery cell 302 may be an electrode assembly including at least one stepped structure. The stepped structure of the battery cell 302 (or the electrode assembly) may be formed such that the positive electrode plates 310 and the negative electrode plates 320 stacked vertically (e.g., in the Z-axis direction) have different surface areas and/or shapes. In an embodiment, the battery cell 302 (or the electrode assembly) may include a first portion 302a and a second portion 302b having different surface areas so as to form a stepped structure. The number of stepped structures of the battery cell 302 (or the electrode assembly) is not limited, and may include multiple stepped structures as needed.

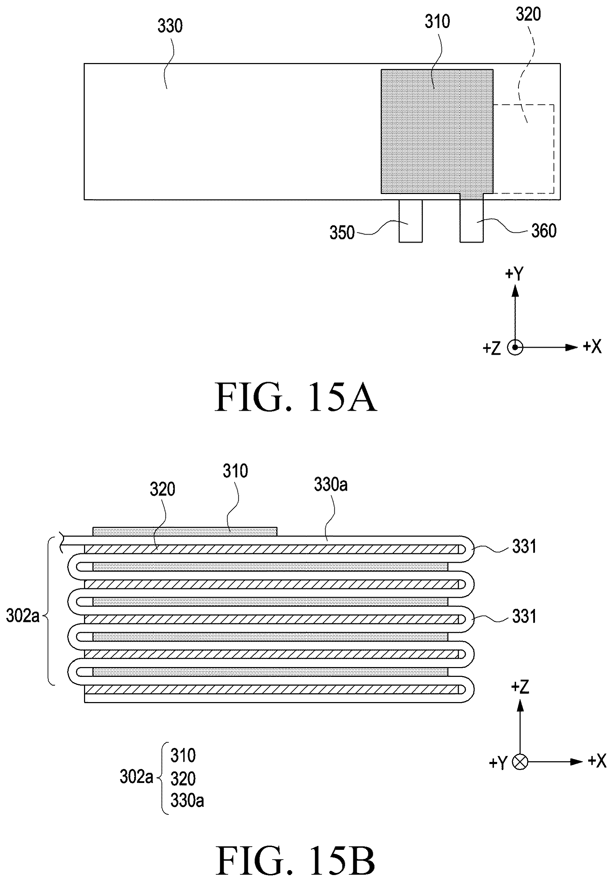

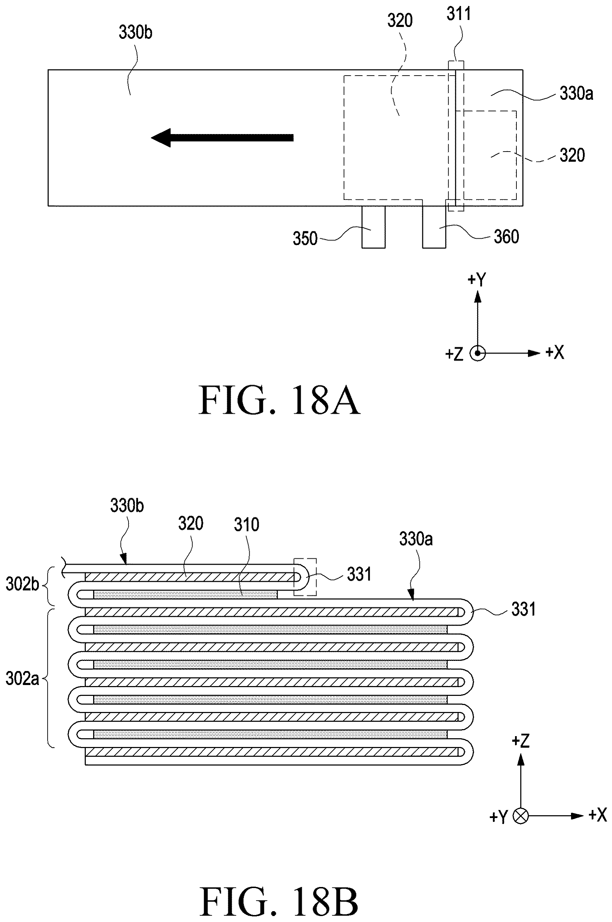

Hereinafter, referring to FIGS. 9A to 14B, processes of forming the first portion 302a of the battery cell 302 will be described, and referring to FIGS. 15A to 18B, a process of forming the second portion 302b of the battery cell 302 will be described.

Referring to FIGS. 9A and 9B, to manufacture the battery cell 302 according to an embodiment, a negative electrode plate 320 having a first surface area may be disposed on the separator 330. According to an embodiment, the negative electrode plate 320 may have an irregular shape, rather than a rectangular or square shape. Here, the polarity of the electrode disposed at the lowermost stage (or the lowermost layer formed by the separator 330) of the battery cell 302 (or the electrode assembly) is not limited, and a positive electrode plate 310 may be disposed instead. The separator 330 may be rectangular, and an edge as a longitudinal edge (e.g., an edge in the X-axis direction) may be longer than an edge as a widthwise edge (e.g., an edge in the Y-axis direction). The electrode plates 310 and 320 may be disposed along the longitudinal edge, and the separator 330 may be folded in the longitudinal direction (in the X-axis direction) to form a stacked structure of electrodes. The battery cell 302 may include a positive electrode tab 350 and/or a negative electrode tab 360 electrically connected to the positive electrode plates 310 and/or the negative electrode plates 320.

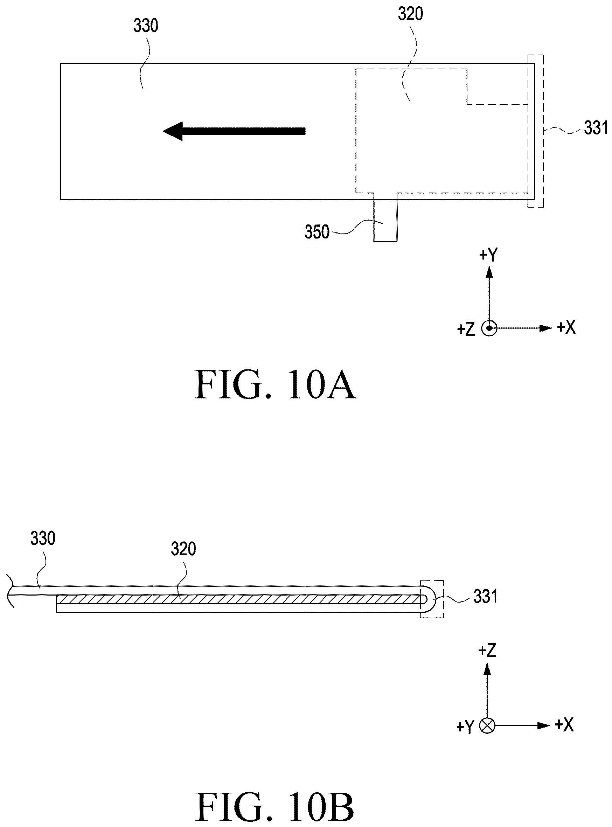

Referring to FIGS. 10A to 11B, according to an embodiment, the separator 330 may be folded in the direction indicated by an arrow in FIG. 10A so as to cover an upper surface (e.g., the +Z-directional surface) of the negative electrode plate 320 and to surround one side surface (e.g., the +X-directional side surface) of the negative electrode plate 320. At this time, a folding region 331 may be formed. Referring to FIGS. 11A to 11B, according to an embodiment, a positive electrode plate 310 having a first surface area may be stacked at a position aligned or overlapped with the negative electrode plate 320 with the separator 330 interposed therebetween.

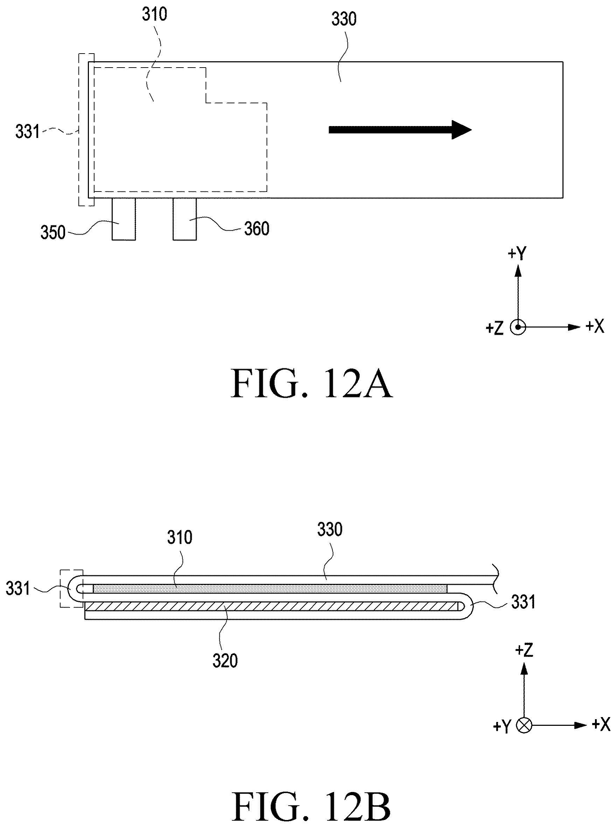

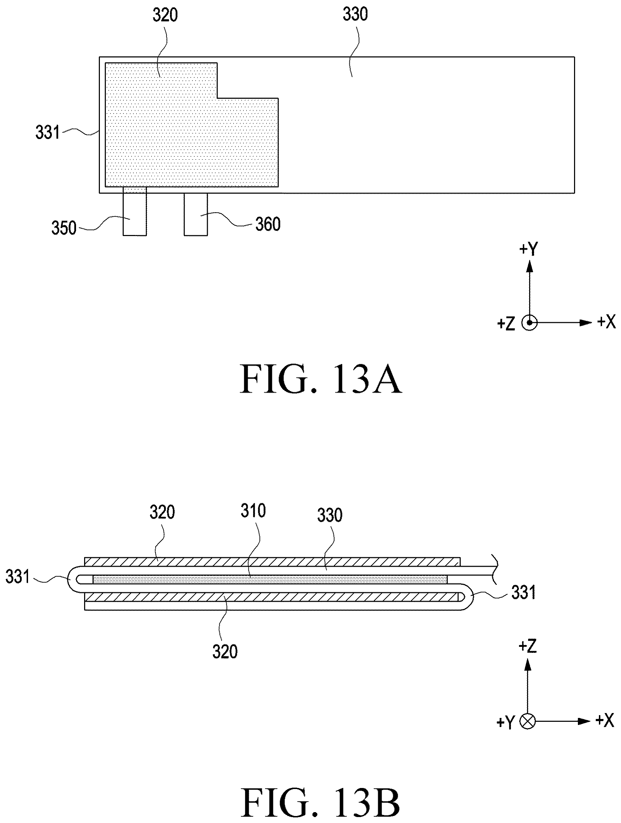

Referring to FIGS. 12A to 13B, according to an embodiment, the separator 330 may be folded in the direction indicated by an arrow in FIG. 12A so as to cover an upper surface (e.g., a +Z-directional surface) of the positive electrode plate 310 and to surround one side surface (e.g., a -X-directional side surface) of the positive electrode plate 310. At this time, a folded portion (e.g., the folding region 331) may be formed. Referring to FIGS. 13A to 13B, for example, a negative electrode plate 320 may be stacked at a position aligned or overlapped with the positive electrode plate 310 with the separator 330 interposed therebetween.

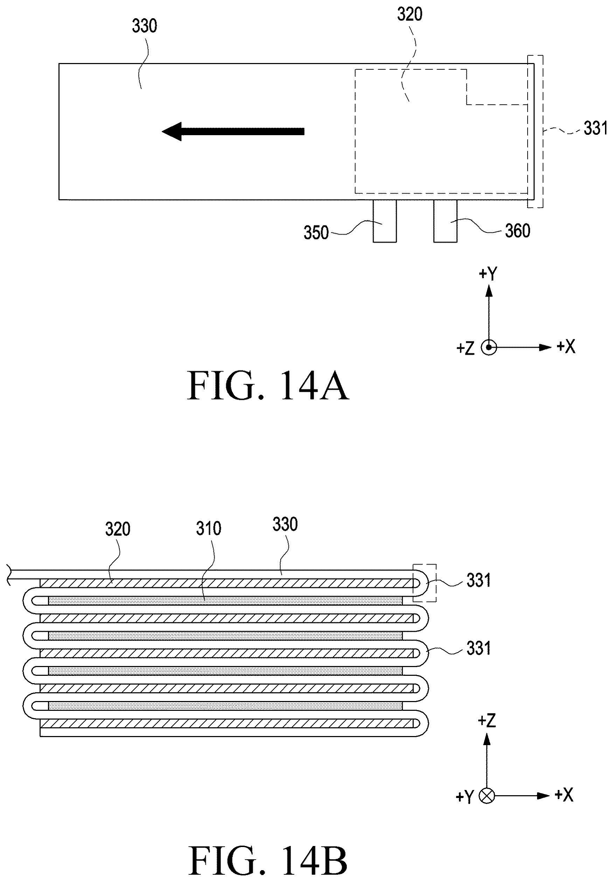

Referring to FIGS. 14A and 14B, according to an embodiment, as described above with reference to FIGS. 9A to 13B, by repeatedly stacking the positive electrode plates 310 or the negative electrode plates 320 and folding the separator 330 in opposite directions (e.g., in the X-axis direction), an electrode assembly (e.g., the first portion 302a) may be formed.

Referring to FIGS. 15A and 15B, according to an embodiment, a positive electrode plate 310 having a second surface area different from the first surface area of the electrode plates 310 and 320 of the first portion 302a may be stacked on the separator 330. However, the positive electrode plate 310 having the second surface area is not limited thereto, and when the uppermost electrode plate having the first surface area is the positive electrode plate 310, a negative electrode plate 320 having the second surface area may be stacked instead.

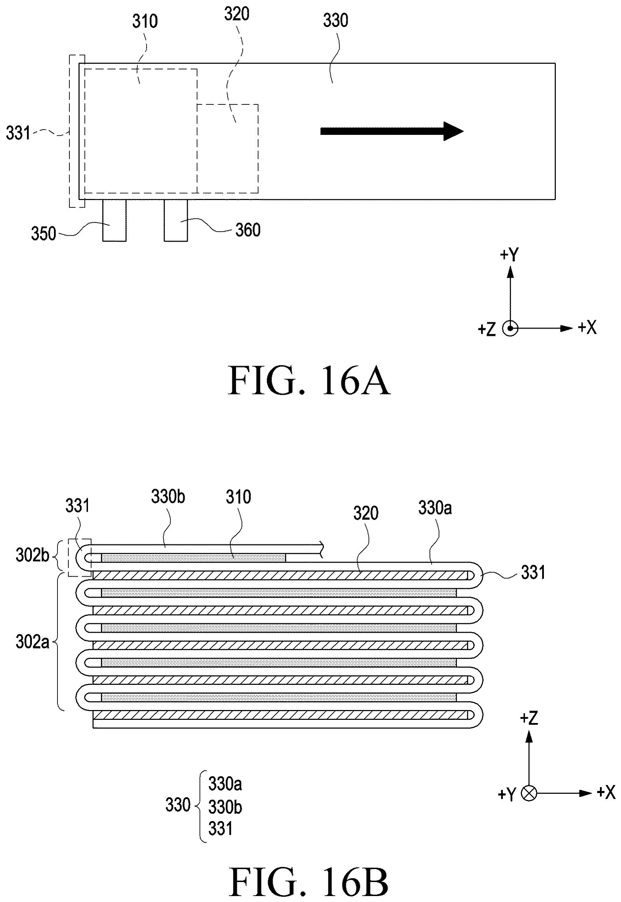

In FIGS. 15A to 18B, according to an embodiment, the separator 330 constituting the first portion 302a and the second portion 302b of the battery cell 302 may be a single member, but for convenience of description, it may be divided into a first region 330a and a second region 330b. Referring to FIGS. 16A to 17B, the separator 330 may be folded in the direction indicated by an arrow in FIG. 16A so as to cover an upper surface (e.g., the +Z-directional surface) of the positive electrode plate 310 and to surround one side surface (e.g., the -X-directional side surface) of the positive electrode plate 310, and a negative electrode plate 320 having the second surface area may be stacked at a position aligned or overlapped with the positive electrode plate 310 with the separator 330 interposed therebetween. Referring to FIGS. 18A to 18B, the separator 330 may be folded in the direction indicated by an arrow in FIG. 18A so as to cover an upper surface (e.g., the +Z-directional surface) of the negative electrode plate 320 and to surround one side surface (e.g., the +X-directional side surface) of the negative electrode plate 320. Referring to FIGS. 18A and 18B, according to an embodiment, as described above with reference to FIGS. 15A to 17B, by repeatedly stacking the positive electrode plate 310 or the negative electrode plate 320 and folding the separator 330 in opposite directions (e.g., in the X-axis direction), the second portion 302b stacked on the first portion 302a may be formed.

Referring to FIGS. 19A and 19B, and also referring to FIG. 7B, according to an embodiment, at least a portion of the separator 330 may be notched (or cut) due to the structure of the irregular first portion 302a. According to an embodiment, the separator 330 (or the first region 330a) that has been folded and stacked multiple times may include portions that do not overlap the irregular positive electrode plates 310 and the irregular negative electrode plates 320 of the first portion 302a, and the portions (e.g., region C in FIG. 19A) may be notched with margins 3340 from edges of the electrode plates 310 and 320. For example, folding regions 331 of the separator 330 disposed above and below may be bonded to be integrated with each other. For example, margins 3340 of the separator 330 disposed above and below may be bonded and processed to be integrated with each other. By bonding and processing the folding regions 331 and the margins 3340, the side surfaces of the electrode plates 310 and 320 may be surrounded by the separator 330 and may not be exposed to the outside.

In portable electronic devices (e.g., smartphones), the need for batteries or cells having high energy density is increasing according to the demand for miniaturization and component integration to improve portability. However, there is a limitation in increasing the energy density or charge capacity of the device with a regular-shaped battery. In contrast, when the battery is formed in an irregular shape according to the mounting space inside the electronic device, the energy density of the battery may be maximized within the limited mounting space.

An embodiment disclosed herein may provide a battery including an electrode assembly in which irregular electrode plates are stacked to have at least one stepped structure, and an electronic device including the same.

However, the problems to be solved by the disclosure are not limited to those mentioned above, and various modifications may be made without departing from the spirit and scope of the disclosure.

An embodiment disclosed herein may provide a battery that may be applied in various forms depending on a mounting structure inside an electronic device and that has improved mounting efficiency and increased or maximized energy density compared with a regular-shaped battery, and an electronic device including the same.

The effects that are capable of being obtained by the disclosure are not limited to those described above, and other effects not described above may be clearly understood by a person ordinarily skilled in the art to which the disclosure belongs based on the following description.

According to an embodiment of the disclosure, it is possible to provide an electronic device 101. The electronic device may include a battery 260 or 300 including a battery cell 302. The battery cell may include a plurality of positive electrode plates 310, a plurality of negative electrode plates 320 alternately stacked with the positive electrode plates, and a single separator 330 configured to individually separate the positive electrode plates and the negative electrode plates facing each other. The separator may form a plurality of layers in which the positive electrode plates and the negative electrode plates are alternately arranged one by one. The separator may include a plurality of folding regions 331 configured to surround at least a portion of the first side surfaces (e.g., +X-directional side surfaces) or second side surfaces (e.g., -X-directional side surfaces) of the positive electrode plates or the negative electrode plates oriented in opposite directions to each other. The battery cell may have an irregular structure including at least one portion retracted from the folding regions in a first direction (e.g., +X direction) or a second direction (e.g., -X direction).

According to an embodiment, the battery cell may include a first portion 302a and a second portion 302b stacked on the first portion. The first portion may include at least one first positive electrode plate and at least one first negative electrode plate, each having a first surface area, and a first region 330a of the separator. The second portion may include at least one second positive electrode plate and at least one second negative electrode plate each having a second surface area different from the first surface area, and a second region 330b of the separator extending from the first region.

According to an embodiment, at least one of the first portion or the second portion may have an irregular structure including at least one portion retracted in the first direction or the second direction from folding regions of the first region of the separator or folding regions of the second region of the separator.

According to an embodiment, the second portion may be disposed to overlap the first portion when viewed in a stacking direction.

According to an embodiment, the second portion may be disposed such that at least a portion thereof does not overlap the first portion when viewed in a stacking direction.

According to an embodiment, the electronic device may further include a third portion, the third portion being stacked on the second portion and including at least one positive electrode plate and at least one negative electrode plate each having a surface area different from the second surface area, and a portion of the separator extending from the second region.

According to an embodiment, when the first surface area is greater than the second surface area, the first negative electrode plate of the first portion and the second positive electrode plate of the second portion may be disposed to face each other with the separator interposed therebetween, thereby forming a stepped structure of the battery cell.

According to an embodiment, when the second surface area is greater than the first surface area, the first positive electrode plate of the first portion and the second negative electrode plate of the second portion may be disposed to face each other with the separator interposed therebetween, thereby forming a stepped structure of the battery cell.

According to an embodiment, the folding regions of the separator may surround the first side surfaces of the positive electrode plates and the second side surfaces of the negative electrode plates.

According to an embodiment, folding regions disposed to overlap each other when viewed in a stacking direction may be bonded together.

According to an embodiment, the first side surfaces and the second side surfaces of the positive electrode plates may be closed from an exterior of the battery cell by the separator.

According to an embodiment, the positive electrode plate may include a positive electrode substrate and a positive electrode active material disposed on one surface or both surfaces of the positive electrode substrate.

According to an embodiment, the negative electrode plate may include a negative electrode substrate and a negative electrode active material disposed on one surface or both surfaces of the negative electrode substrate.

According to an embodiment, the battery cell may further include a positive electrode tab and a negative electrode tab protruding in one direction intersecting the first direction or the second direction.

According to an embodiment, the battery may further include a battery case formed to surround the battery cell.

According to an embodiment of the disclosure, it is possible to provide an electronic device 101. The electronic device may include a battery 260 or 300 including a battery cell 302. The battery cell may include a plurality of positive electrode plates 310, a plurality of negative electrode plates 320 alternately stacked with the positive electrode plates, and a single separator 330 configured to individually separate the positive electrode plates and the negative electrode plates facing each other. The separator may form a plurality of layers in which the positive electrode plates and the negative electrode plates are alternately arranged one by one. The separator may include a plurality of folding regions 331 configured to surround at least a portion of the first side surfaces (e.g., +X-directional side surfaces) or second side surfaces (e.g., -X-directional side surfaces) of the positive electrode plates or the negative electrode plates oriented in opposite directions to each other. The battery cell may include a first portion 302a and a second portion 302b stacked on the first portion. The first portion may include at least one first positive electrode plate and at least one first negative electrode plate, each having a first surface area, and a first region 330a of the separator. The second portion may include at least one second positive electrode plate and at least one second negative electrode plate each having a second surface area different from the first surface area, and a second region 330b of the separator extending from the first region.

According to an embodiment, the battery cell may have an irregular structure including at least one portion retracted from the folding regions in a first direction (e.g., +X direction) or a second direction (e.g., -X direction).

According to an embodiment, at least one of the first portion or the second portion may have an irregular structure including at least one portion retracted in the first direction or the second direction from folding regions of the first region of the separator or folding regions of the second region of the separator.

According to an embodiment, the second portion may be disposed to overlap the first portion when viewed in a stacking direction. The second portion may be disposed such that at least a portion thereof does not overlap the first portion when viewed in a stacking direction.

According to an embodiment, when the first surface area is greater than the second surface area, the first negative electrode plate of the first portion and the second positive electrode plate of the second portion may be disposed to face each other with the separator interposed therebetween, thereby forming a stepped structure of the battery cell. When the second area is greater than the first area, the first positive electrode plate of the first portion and the second negative electrode plate of the second portion may be disposed to face each other with the separator interposed therebetween, thereby forming a stepped structure of the battery cell.

According to an embodiment of the disclosure, a battery 260 or 300 may be provided. The battery may include a battery cell 302. The battery cell may include a plurality of positive electrode plates 310, a plurality of negative electrode plates 320 alternately stacked with the positive electrode plates, and a single separator 330 configured to individually separate the positive electrode plates and the negative electrode plates facing each other. The separator may form a plurality of layers in which the positive electrode plates and the negative electrode plates are alternately arranged one by one. The separator may include a plurality of folding regions 331 configured to surround at least a portion of the first side surfaces (e.g., +X-directional side surfaces) or second side surfaces (e.g., -X-directional side surfaces) of the positive electrode plates or the negative electrode plates oriented in opposite directions to each other. The battery cell may include a first portion 302a and a second portion 302b stacked on the first portion. The first portion may include at least one first positive electrode plate and at least one first negative electrode plate, each having a first surface area, and a first region 330a of the separator. The second portion may include at least one second positive electrode plate and at least one second negative electrode plate each having a second surface area different from the first surface area, and a second region 330b of the separator extending from the first region.

According to an embodiment, at least one of the first portion or the second portion may have an irregular structure including at least one portion retracted in the first direction or the second direction from folding regions of the first region of the separator or folding regions of the second region of the separator.

According to an embodiment, the second portion may be disposed to overlap the first portion when viewed in a stacking direction.

According to an embodiment, the second portion may be disposed such that at least a portion thereof does not overlap the first portion when viewed in a stacking direction.

According to an embodiment, the electronic device may further include a third portion, the third portion being stacked on the second portion and including at least one positive electrode plate and at least one negative electrode plate each having a surface area different from the second surface area, and a portion of the separator extending from the second region.

According to an embodiment, when the first surface area is greater than the second surface area, the first negative electrode plate of the first portion and the second positive electrode plate of the second portion may be disposed to face each other with the separator interposed therebetween, thereby forming a stepped structure of the battery cell.

According to an embodiment, when the second area is greater than the first area, the first positive electrode plate of the first portion and the second negative electrode plate of the second portion may be disposed to face each other with the separator interposed therebetween, thereby forming a stepped structure of the battery cell.

According to an embodiment, the folding regions of the separator may surround the first-directional side surfaces of the positive electrode plates and the second-directional side surfaces of the negative electrode plates.

According to an embodiment, folding regions disposed to overlap each other when viewed in a stacking direction may be bonded together.

According to an embodiment, the first side surfaces and the second side surfaces of the positive electrode plates may be closed from an exterior of the battery cell by the separator.

According to an embodiment, the positive electrode plate may include a positive electrode substrate and a positive electrode active material disposed on one surface or both surfaces of the positive electrode substrate.

According to an embodiment, the negative electrode plate may include a negative electrode substrate and a negative electrode active material disposed on one surface or both surfaces of the negative electrode substrate.

According to an embodiment, the battery cell may further include a positive electrode tab and a negative electrode tab protruding in one direction intersecting the first direction or the second direction.

According to an embodiment, the battery may further include a battery case formed to surround the battery cell.

Although the disclosure has been described with reference to an embodiment as an example, it is to be understood that the embodiment is intended to be exemplary and is not limiting the disclosure. It will be apparent to those skilled in the art that various changes in form and detail may be made without departing from the overall scope of the disclosure, including the appended claims and their equivalents.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a battery (260; 300) including a battery cell (302);
wherein the battery cell includes:
a plurality of positive electrode plates (310);
a plurality of negative electrode plates (320) alternately stacked with the positive electrode plates; and
a single separator (330) configured to individually separate the positive electrode plates and the negative electrode plates facing each other,
wherein the separator includes a plurality of folding regions (331) surrounding at least a portion of first side surfaces and second side surfaces of the positive electrode plates or the negative electrode plates, the first side surfaces facing a first direction,and the second side surfaces facing a second direction opposite to the first direction, and
wherein the battery cell has an irregular structure including at least one portion that is retracted from the folding regions in the first direction or the second direction.

2. The electronic device of claim 2, wherein the battery cell comprises:
a first portion (302a) including at least one first positive electrode plate and at least one first negative electrode plate each having a first surface area, and a first region (330a) of the separator; and
a second portion (302b) disposed on the first portion and including at least one second positive electrode plate and at least one second negative electrode plate each having a second surface area different from the first surface area, and a second region (330b) of the separator extending from the first region.

3. The electronic device of claim 2, wherein at least one of the first portion or the second portion includes an irregular structure including at least one portion retracted in the first direction or the second direction from the folding regions of the first region or the folding regions of the second region of the separator.

4. The electronic device of claim 2 or 3, wherein the second portion is disposed to overlap the first portion when viewed in a stacking direction.

5. The electronic device of claim 2 or 3, wherein the second portion is disposed so that at least a portion thereof does not overlap the first portion when viewed in a stacking direction.

6. The electronic device of any one of claims 2 to 5, further comprising:
a third portion disposed on the second portion and including at least one positive electrode plate and at least one negative electrode plate, each having a surface area different from the second surface area, and a portion of the separator extending from the second region.

7. The electronic device according to any one of claims 2 to 6, wherein, when the first surface area is greater than the second surface area, the first negative electrode plate of the first portion and the second positive electrode plate of the second portion are disposed to face each other with the separator interposed therebetween, thereby forming a stepped structure of the battery cell.

8. The electronic device according to any one of claims 2 to 6, wherein, when the second surface area is greater than the first surface area, the first positive electrode plate of the first portion and the second negative electrode plate of the second portion are disposed to face each other with the separator interposed therebetween, thereby forming a stepped structure of the battery cell.

9. The electronic device according to any one of claims 1 to 8, wherein the folding regions of the separator surround the first side surfaces of the positive electrode plates and the second side surfaces of the negative electrode plates.

10. The electronic device according to any one of claims 1 to 9, wherein folding regions, which are disposed to overlap each other when viewed in a stacking direction, are bonded to each other.

11. The electronic device according to claim 10, wherein the first side surfaces and the second side surfaces of the positive electrode plates are closed from an exterior of the battery cell by the separator.

12. The electronic device according to any one of claims 1 to 11, wherein the positive electrode plate includes a positive electrode substrate and a positive electrode active agent disposed on one surface or both surfaces of the positive electrode substrate, and
wherein the negative electrode plate includes a negative electrode substrate and a negative electrode active material disposed on one surface or both surfaces of the negative electrode substrate.

13. The electronic device according to any one of claims 1 to 12, wherein the battery cell further comprises a positive electrode tab and a negative electrode tab protruding in one direction intersecting the first direction or the second direction.

14. The electronic device according to any one of claims 1 to 13, wherein the battery further comprises a battery case formed to surround the battery cell.

15. An electronic device (101) comprising:
a battery (260; 300) including a battery cell (302);
wherein the battery cell comprises:
a plurality of positive electrode plates (310);
a plurality of negative electrode plates (320) alternately stacked with the positive electrode plates; and
a single separator (330) configured to individually separate the positive electrode plates and the negative electrode plates facing each other,
wherein the separator includes a plurality of folding regions (331) surrounding at least a portion of first side surfaces and second side surfaces of the positive electrode plates or the negative electrode plates, the first side surfaces facing a first direction, the second side surfaces facing a second direction opposite to the first direction, and
wherein the battery cell comprises:
a first portion (302a) including at least one first positive electrode plate and at least one first negative electrode plate each having a first surface area, and a first region (330a) of the separator; and
a second portion (302b) disposed on the first portion and including at least one second positive electrode plate and at least one second negative electrode plate each having a second surface area different from the first surface area, and a second region (330b) of the separator extending from the first region.
